# EUROPÄISCHE PATENTANMELDUNG

(11) **EP 4 467 488 A1**
(43) Veröffentlichungstag der Anmeldung: **27.11.2024**
(21) Anmeldenummer: 24175883.8
(22) Anmeldetag: 15.05.2024
(51) Int. Cl.: B65G 11/10, B65G 11/20, B65G 47/44

(54) **ÜBERNAHMEEINRICHTUNG FÜR EINE SORTIERANLAGE UND EINE SORTIERANLAGE**

(30) Priorität: 25.05.2023 CH 5552023
(71) Anmelder: FERAG AG, 8340 Hinwil (CH)
(72) Erfinder: RUGE, Martin, 8340 Hinwil (CH)
(74) Vertreter: Frei Patent Attorneys

(57) **Zusammenfassung**

Die Erfindung betrifft eine Übernahmeeinrichtung (21) für eine Sortieranlage (1) zur Übernahme von Stückgütern (2), welche von einem Sortierförderer (3) an einer Abgabestelle (4) abgegeben werden, enthaltend eine, ein Speicherraum (V) ausbildende Puffervorrichtung (22) zum Zwischenspeichern bzw. Puffern von abgegebenen Stückgütern (2), wobei der Speicherraum (V) der Puffervorrichtung (22) während des Betriebs der Sortieranlage (1) veränderbar ist. Die Puffervorrichtung (22) umfasst ein flexibles, flächenförmiges Auflageorgan (23.1), welches zum Zwischenspeichern von Stückgütern (2) eine den Speicherraum (V) begrenzende Aufnahmemulde (24) für die Stückgüter (2) ausbildet. Die Puffervorrichtung (22) enthält ferner einen Verstellmechanismus (41.1) zum Verstellen der Muldentiefe (T) zwecks Veränderung des Speicherraums (V).

## Beschreibung

Die Erfindung liegt auf dem Gebiet der Förder- und Sortiertechnik und betrifft eine Übernahmeeinrichtung für eine Sortieranlage sowie eine Sortieranlage zum Sortieren von Stückgütern, welche von einem Sortierförderer entlang einer Abgabestrecke an Abgabestellen abgegeben werden.

In Sortieranlagen werden Stückgüter mittels eines Sortierförderers entlang einer Abgabestrecke zu Abgabestellen hin gefördert und nach definierten Kriterien, wie z. B. Produktart, Empfängeradresse, Form, Grösse, Gewicht, etc. an den Abgabestellen abgegeben. Hierzu werden die Stückgüter an den entsprechenden Abgabestellen über eine Steuerungseinrichtung gezielt vom Sortierförderer an Übernahmeeinrichtungen abgegeben. Die Stückgüter werden dabei jeweils von der Abgabestelle in einen Übernahmebereich bewegt. Die Übernahmeeinrichtung kann z. B. eine den Übernahmebereich ausbildende Sammelvorrichtung mit einem Sammeltisch oder Sammelbehälter umfassen, in welcher die abgegebenen Stückgüter gesammelt werden.

Die Förderung bzw. Bewegung der Stückgüter zwischen Abgabestelle und Übernahmebereich erfolgt in der Regel ungeführt und passiv. Passive Förderung bedeutet, dass die Stückgüter alleine durch ihre vom Sortierförderer erhaltene kinetische Energie und/oder durch Schwerkraftunterstützung gefördert werden. D.h., es sind keine aktiv angetriebenen Förderorgane vorgesehen, welche die Stückgüter fördern. So ist es beispielsweise bekannt, Stückgüter über Rutschen von der Abgabestelle in den Übernahmebereich zu fördern.

Es kann nun vorkommen, dass innerhalb eines bestimmten Zeitraums vergleichsweise viele Stückgüter an einer Abgabestelle abgegeben werden, welche die Aufnahmekapazität bzw. die Weiterverarbeitungskapazität im Übernahmebereich übersteigen. Andererseits kommt es auch vor, dass über einen bestimmten Zeitraum vergleichsweise wenige Stückgüter an einer Abgabestelle abgegeben werden, welche unterhalb der Aufnahmekapazität bzw. die Weiterverarbeitungskapazität im Übernahmebereich liegen.

Es ist eine **Aufgabe** vorliegender Erfindung, eine Puffervorrichtung zum Zwischenspeichern bzw. Puffern von an Abgabestellen abgegebenen Stückgütern vorzuschlagen für den Fall, dass die Anzahl der in einem Zeitraum abgegebenen Stückgüter die Aufnahmekapazität bzw. die Weiterverarbeitungskapazität im Übernahmebereich überschreitet. Die Puffervorrichtung, auch Speichervorrichtung oder Zwischenspeichervorrichtung genannt, soll einfach aufgebaut sowie wartungsarm sein und ein schnelles Befüllen und wieder Entleeren des Pufferspeichers ermöglichen. Ferner soll die Puffervorrichtung ohne zusätzliche aktive Fördermittel zum (Weiter-) Fördern der Stückgüter auskommen.

Die Aufgabe wird durch die Merkmale der unabhängigen Ansprüche 1, 21 und 23 gelöst. Die abhängigen Ansprüche umfassen besondere Weiterbildungen und Ausführungsformen der Erfindung.

Die Erfindung betrifft anspruchsgemäss eine Übernahmeeinrichtung für eine Sortieranlage zur Übernahme von Stückgütern, welche von einem Sortierförderer an einer Abgabestelle abgegeben werden. Die Übernahmeeinrichtung enthält eine einen Speicherraum bzw. ein Speichervolumen ausbildende Puffervorrichtung zum Zwischenspeichern bzw. Puffern von abgegebenen Stückgütern, wobei die Grösse des Speicherraums der Puffervorrichtung während des laufenden Betriebs der Sortieranlage einstellbar bzw. veränderbar ist.

Die Puffervorrichtung ist insbesondere als Durchlaufspeicher ausgebildet, bei welchem die Stückgüter über einen Eingang dem Speicherraum zugeführt und über einen dem Eingang in Prozessrichtung nachgelagerten Ausgang aus dem Speicherraum weggeführt werden.

Erfindungsgemäss umfasst die Puffervorrichtung ein flexibles, flächenförmiges Auflageorgan, welches zum Zwischenspeichern bzw. Puffern von Stückgütern eine den Speicherraum begrenzende Aufnahmemulde für die Stückgüter ausbildet.

Die Puffervorrichtung enthält einen Verstellmechanismus zum Verstellen der Tiefe der Aufnahmemulde, der so genannten Muldentiefe, zwecks Veränderung des Speicherraums.

Mittels dem Verstellmechanismus lässt sich das Auflageorgan insbesondere zwischen einer Speicherstellung, in welcher das Auflageorgan eine Aufnahmemulde mit einem einstellbaren Speicherraum zur Zwischenspeicherung bzw. Pufferung von mindestens einem Stückgut ausbildet und einer Leerstellung, in welcher das Auflageorgan keinen Speicherraum zur Zwischenspeicherung bzw. Pufferung von Stückgütern ausbildet, verstellen. In der Leerstellung bildet das Auflageorgan zwischen einem Muldeneingang und einem Muldenausgang insbesondere eine ebene Auflagefläche bzw. Gleit- oder Rutschfläche für die Stückgüter aus.

Das flexible, flächenförmige Auflageorgan bildet insbesondere den Boden des Speicherraums aus.

Flexibel bedeutet, dass das Auflageorgan insbesondere ohne plastische Verformung, biegsam bzw. nachgiebig ist. Die Biegsamkeit kann auch durch Gelenke erfolgen. Die Stückgutauflage kann beispielsweise aufgrund der Schwerkrafteinwirkung durchhängen.

Flächenförmig bedeutet, dass die Flächenausdehnung (Breite und Länge) des Auflageorganes um ein Vielfaches grösser ist als seine Höhenausdehnung (Dicke).

Die Aufnahmemulde wird insbesondere durch einen in Prozessrichtung vor der Aufnahmemulde angeordneten Muldeneingang und einem in Prozessrichtung nach der Aufnahmemulde angeordneten Muldenausgang begrenzt. Das heisst, der Muldenausgang ist vom Muldeneingang verschieden.

Die Stückgüter werden insbesondere über den Muldeneingang in Prozessrichtung in die Aufnahmemulde gefördert bzw. bewegt.

Die Stückgüter werden insbesondere über den Muldenausgang in Prozessrichtung aus der Aufnahmemulde herausgefördert bzw. bewegt.

Das heisst, die Aufnahmemulde wird zwischen einem Muldeneingang und einem Muldenausgang ausgebildet. Beim Muldeneingang bzw. Muldenausgang wird das Auflageorgan zur Ausbildung der Aufnahmemulde insbesondere zum Speicherraum hin nach unten umgelenkt.

Das Auflageorgan ist am Muldeneingang und am Muldenausgang jeweils insbesondere über eine ortsfeste Struktur, wie beispielsweise Umlenkorgane, geführt oder an dieser befestigt.

Entsprechend werden die Stückgüter in Prozessrichtung über den Muldeneingang in die Aufnahmemulde hinein und über den Muldenausgang wieder aus der Aufnahmemulde heraus bewegt.

Das Auflageorgan ist im Bereich der Aufnahmemulde bzw. zwischen dem Muldeneingang und Muldenausgang insbesondere durchhängend, insbesondere frei durchhängend, angeordnet.

Die Aufnahmemulde zeichnet sich insbesondere durch eine konkave Krümmung des Auflageorgans aus. Die Aufnahmemulde wird insbesondere durch einen schlaufenartigen Verlauf des Auflageorgans gebildet. Die Aufnahmemulde stellt insbesondere eine hängende Schlaufe dar.

Gemäss einer besonderen Ausführung liegt der Muldenausgang bezogen auf die Schwerkraftrichtung tiefer als der Muldeneingang. Hierdurch wird gewährleistet, dass bei einer Verkleinerung des Speicherraums bzw. der Aufnahmemulde die Stückgüter die Aufnahmemulde über den tiefer gelegenen Muldenausgang verlassen.

Gemäss einer ersten Erfindungsvariante ist der Verstellmechanismus dazu ausgelegt, die Länge des Auflageorgans zwischen dem Muldeneingang und dem Muldenausgang der Auflagemulde zu verändern. Die Veränderung der besagten Länge bewirkt eine Verstellung der Muldentiefe und somit des Speicherraums. So wird die Muldentiefe und somit der Speicherraum bei einem Verkürzen der Länge kleiner und bei einer Zunahme der Länge grösser.

Je nach anfallender Menge an Stückgütern an einer Abgabestelle, welche die Übernahme- bzw. Weiterverarbeitungskapazität im Übernahmebereich überschreitet, wird die Länge des Auflageorgans zwischen dem Muldeneingang und dem Muldenausgang derart vergrössert, dass eine ausreichende Muldentiefe und somit ein ausreichender Speicherraum zur Pufferung der überzähligen Stückgüter, welche nicht unmittelbar dem Übernahmebereich zugeführt werden können, zur Verfügung steht.

Zum Leeren des Zwischenspeichers bzw. des Puffers, bzw. zum Weitertransportieren einzelner oder Gruppen von Stückgütern in den Übernahmebereich wird die Muldentiefe und somit der Speicherraum durch Verkürzen der Länge des Auflageorgans zwischen dem Muldeneingang und dem Muldenausgang verkleinert. Durch das Verkleinern der Muldentiefe und somit der Aufnahmemulde, werden die Stückgüter in der Aufnahmemulde angehoben. Bei diesem Vorgang werden die obersten Stückgüter im Pufferspeicher in Prozessrichtung aus der Aufnahmemulde entlassen und in Richtung Übernahmebereich bewegt.

Zum Verstellen bzw. Verändern der Länge des Auflageorgans zwischen dem Muldeneingang und dem Muldenausgang der Auflagemulde enthält der Verstellmechanismus insbesondere eine Speicherkonfiguration zur Speicherung eines Längenabschnittes des Auflageorgans. Die Speicherkonfiguration enthält hierzu insbesondere mindestens ein Speichermittel zur (Zwischen-) Speicherung eines Längenabschnittes des Auflageorgans.

Das Speichermittel ist insbesondere ausserhalb der Auflagemulde angeordnet.

Es kann vorgesehen sein, dass das Speichermittel in das Umlenkorgan am Muldeneingang bzw. Muldenausgang integriert ist bzw. dieses ausbildet. So kann beispielsweise das Umlenkorgan am Muldeneingang bzw. Muldenausgang durch den Auf- und Abwickelkörper ausgebildet werden.

Soll beispielsweise die Länge des Auflageorgans zwischen dem Muldeneingang und dem Muldenausgang der Auflagemulde zwecks Verkleinerung des Speicherraums verringert werden, so wird der verkürzte Längenabschnitt insbesondere ausserhalb der Aufnahmemulde im Speichermittel gespeichert.

Soll andererseits die Länge des Auflageorgans zwischen dem Muldeneingang und dem Muldenausgang der Auflagemulde zwecks Vergrösserung des Speicherraums vergrössert werden, so wird die erforderliche Länge aus dem Speichermittel freigegeben.

Während des Betriebs der Sortieranlage kann sich die Grösse des Speicherraums der Aufnahmemulde ständig ändern. Das heisst, die Grösse des Speicherraums wird insbesondere kontinuierlich, d.h. dynamisch an die aktuell zu puffernde Menge an Stückgütern angepasst Die Speicherkonfiguration bzw. dessen Speichermittel ist daher als dynamischer Speicher ausgelegt.

Die Übernahmeeinrichtung kann hierzu Sensormittel zur zeitabhängigen Erfassung der an einer Abgabestelle abgegebenen Stückgüter enthalten. Die Sensormittel können z. B. eine an der Abgabestelle angeordnete Lichtschranke umfassen, welche fortlaufend die abgegebenen Stückgüter erfasst.

Alternativ oder zusätzlich können auch Sensormittel in Ausführung einer Kraftmessanordnung vorgesehen sein, welche fortlaufend eine vom Auflageorgan ausgeübte Zugkraft misst. Aus der gemessenen Zugkraft lässt sich das Gesamtgewicht der in der Aufnahmemulde zwischengespeicherten Stückgüter ermitteln. Die gemessene Zugkraft ist daher ein Mass für die in der Aufnahmemulde zwischengespeicherten Menge an Stückgütern.

Die Grösse des Speicherraums wird nun mittels der Steuerungseinrichtung in Abhängigkeit von den mit den Sensormitteln erfassten Stückgütern sowie der Verarbeitungskapazität im Übernahmebereich eingestellt.

Bei der Steuerungseinrichtung handelt es sich insbesondere um die Anlagensteuerung zur Steuerung der Sortieranlage.

Da in einer Sortieranlage die Abgabe der Stückgüter an vorbestimmten Abgabestellen durch die Steuerungseinrichtung gesteuert erfolgt, sind die Informationen (Abgabeinformationen) über den Abgabezeitpunkt sowie über die Abgabestelle der abzugebenden bzw. abgegebenen Stückgüter bereits in der Steuerungseinrichtung hinterlegt.

Entsprechend lässt sich die Grösse des Speicherraums anstelle der Hilfe von Sensormitteln auch auf Grundlage der in der Steuerungseinrichtung hinterlegten Abgabeinformationen zu den abzugebenden bzw. abgegebenen Stückgütern einstellen.

Gemäss einer Ausführungsform enthält die Speicherkonfiguration zwecks Vergrösserung oder Verkleinerung der Muldentiefe mindestens einen Auf- und Abwickelkörper zum Auf- und Abwickeln eines Längenabschnittes, des Auflageorgans.

Das heisst, das Speichermittel ist hier ein Auf- und Abwickelkörper.

Bei dieser Ausführungsform ist insbesondere ein Endabschnitt des Auflageorgans mit dem mindestens einen Auf- und Abwickelkörper verbunden bzw. an diesem befestigt. Der Auf- und Abwickelkörper wird insbesondere durch einen Antrieb angetrieben.

Gemäss einer Ausführungsform ist das Auflageorgan mit einem in Prozessrichtung vor der Aufnahmemulde, insbesondere vor dem Muldeneingang, angeordneten Endabschnitt am Auf- und Abwickelkörper befestigt.

Gemäss einer weiteren Ausführungsform ist das Auflageorgan mit einem in Prozessrichtung nach der Aufnahmemulde, insbesondere nach dem Muldenausgang, angeordneten Endabschnitt am Auf- und Abwickelkörper befestigt.

Gemäss einer weiteren Ausführungsform enthält die Speicherkonfiguration einen ersten Auf- und Abwickelkörper, an welchem ein in Prozessrichtung vor der Aufnahmemulde, insbesondere vor dem Muldeneingang, angeordneter, erster Endabschnitt des Auflageorgans befestigt ist und einen zweiten Auf- und Abwickelkörper, an welchem ein in Prozessrichtung nach der Aufnahmemulde, insbesondere nach dem Muldenausgang, angeordneter, zweiter Endabschnitt des Auflageorgans befestigt ist.

Die Veränderung der Länge des Auflageorgans zwischen dem Muldeneingang und dem Muldenausgang kann nun simultan durch beide oder jeweils wahlweise durch einen der beiden Auf- und Abwickelkörper erfolgen.

Der Auf- und Abwickelkörper kann z. B. eine Rolle, ein Haspel oder eine Spule sein.

Das Speichermittel kann auch ein Schlaufenspeicher sein.

Bei einem Schlaufenspeicher wird ein Längenabschnitt des Auflageorgan schlaufenartig um mehre Umlenkelemente, wie Umlenkrollen, geführt. Durch Veränderung der Position der Umlenkelemente relativ zueinander kann die Länge des um die Umlenkelemente geführten Längenabschnittes, d.h. die Grösse der Schlaufe des Auflageorgans verändert werden.

Das Speichermittel kann aus einer oder mehreren Tänzerrollen bestehen.

Bei dieser Ausführungsform ist ein Längenabschnitt des Auflageorgan um mindestens eine als Umlenkrolle ausgebildete Tänzerrolle geführt, welche an einem federbelasteten Tänzerarm angeordnet ist. Durch Veränderung der Position des Tänzerarms kann vergleichbar mit einem Schlaufenspeicher die Länge des um die Tänzerrolle geführten Längenabschnittes des Auflageorgan verändert werden.

Zur Verkürzung der Länge des Auflageorgans zwischen einem Muldeneingang und einem Muldenausgang zwecks Verkleinerung der Muldentiefe ist der Verstellmechanismus insbesondere dazu ausgelegt, eine Zugkraft auf das Auflageorgan, insbesondere auf einen Endabschnitt des Auflageorgans auszuüben.

Ist das Speichermittel ein Auf- und Abwickelkörper, so wird die Zugkraft auf das Auflageorgan durch den Aufwickelvorgang erzeugt.

Das Auflageorgan ist beim Muldeneingang bzw. beim Muldenausgang oder sowohl beim Muldeneingang als auch beim Muldenausgang insbesondere um ein Umlenkorgan, wie Umlenkrolle geführt. Die Verstellvorrichtung bzw. das dazugehörige Speichermittel ist nun insbesondere so ausgebildet bzw. angeordnet, dass ein Längsabschnitt des Auflageorgans beim Verändern der Länge des Auflageorgans zwischen dem Muldeneingang und dem Muldenausgang über mindestens eines der Umlenkorgane bewegt wird.

Das Auflageorgan kann auch mit einem Endabschnitt entweder am Muldeneingang oder am Muldenausgang über eine Haltevorrichtung befestigt sein.

Das Auflageorgan kann insbesondere in einer Weiterbildung der ersten Erfindungsvariante in Prozessrichtung einen an den Muldenausgang anschliessenden Auflageabschnitt mit einer Auflagefläche für die aus der Aufnahmemulde entlassenen Stückgüter ausbilden. Die Auflagefläche ist insbesondere eben ausgebildet. Die Auflagefläche ist insbesondere horizontal angeordnet. Die Auflagefläche kann in Prozessrichtung auch ein Gefälle ausbilden, d.h. gegen unten geneigt sein.

Das Auflageorgan wird hier am Muldenausgang aus der Aufnahmemulde insbesondere um ein Umlenkorgan in den Auflageabschnitt umgelenkt.

Der Verstellmechanismus mit der Speicherkonfiguration ist nun so ausgebildet, dass die Länge des Auflageorgans zwischen dem Muldeneingang und dem Muldenausgang verkürzt werden kann, indem der Auflageabschnitt des Auflageorgans über den Verstellmechanismus vorgezogen, d.h. in Prozessrichtung bewegt wird.

Dies erfolgt beispielsweise, indem das Speichermittel der Speicherkonfiguration in Prozessrichtung im Anschluss an den Auflageabschnitt angeordnet ist und mittels Verstellmechanismus eine Zugkraft auf den Auflageabschnitt des Auflageorgans ausgeübt wird.

Durch das Vorziehen des Auflageabschnitt und der damit verbundenen Verkleinerung des Speicherraums werden einzelne Stückgüter über den Muldenausgang aus der Aufnahmemulde heraus bewegt und auf dem durch das Vorziehen mitbewegten Auflageabschnitt in Prozessrichtung bewegt, insbesondere in Richtung Übernahmebereich bewegt.

Das Vorziehen des Auflageabschnittes zwecks Verkleinerung des Speicherraums bewirkt gleichzeitig eine förderaktive Bewegung der auf dem Auflageabschnitt liegenden Stückgüter.

Unterhalb des Auflageabschnitts des Auflageorgans kann ein Stützorgan zum Stützen des flexiblen, flächenförmigen Auflageabschnittes des Auflageorgans gegen unten angeordnet sein.

Gemäss einer alternativen Ausführung ist das Auflageorgan endlos ausgebildet. Entsprechend ist das Auflageorgan um Umlenkorgane, wie Umlenkrollen, geführt. Gemäss dieser Ausführung wird das Speichermittel insbesondere durch einen Schlaufenspeicher oder durch Tänzerrollen oder einer Kombination von beidem ausgebildet. Ferner ist ein Antrieb zur Ausübung einer Zugkraft auf das Auflageorgan zwecks Verkürzung der Länge des Auflageorgans zwischen dem Muldeneingang und dem Muldeneingang vorgesehen. Der Antrieb kann im Zusammenhang mit der Vergrösserung der Länge des Auflageorgans zwischen dem Muldeneingang und dem Muldenausgang auch eine Bremsfunktion ausüben.

Der oben beschriebene Auflageabschnitt des Auflageorgans im Anschluss an den Muldeneingang sowie die dazugehörige Förderfunktion kann auch im Zusammenhang mit einem endlos geführten Auflageorgan realisiert werden.

Gemäss einer zweiten Erfindungsvariante umfasst der Verstellmechanismus eine Hebekonfiguration mit einem Hebeorgan, mittels welchem das Auflageorgan zwecks Veränderung des Speicherraums bzw. der Muldentiefe im Bereich der Aufnahmemulde von unten angehoben oder abgesenkt werden kann. Die Hebekonfiguration umfasst hierzu insbesondere einen Mechanismus zum Anheben und Absenken des Hebeorgans.

Die Hebekonfiguration bzw. der besagte Mechanismus kann z. B. einen hydraulischen, pneumatischen oder elektromotorischen Antrieb umfassen, z. B. mit einem Pneumatik- oder Hydraulikzylinder. Das Hebeorgan kann eine, insbesondere ebene Kontaktfläche zum Auflageorgan hin ausbilden. Das Hebeorgan kann z. B. so ausgebildet sein, dass das Auflageorgan in einer Leerstellung des Hebeorgans, in welcher kein Speicherraum ausgebildet wird, eine ebene Fläche ausbildet. Die ebene Fläche kann horizontal sein. Die ebene Fläche kann in Prozessrichtung nach unten bzw. abwärts geneigt sein. Die ebene Fläche kann eine Rutsch- bzw. Gleitfläche sein. Das Hebeorgan kann hierzu z. B. als Plattenelement ausgebildet sein.

Es ist auch denkbar, dass das Hebeorgan zum Auflageorgan hin eine konvexe Kontaktfläche ausbildet, so dass das Auflageorgan in der Leerstellung des Hebeorgans konvex nach oben geformt bzw. gebogen ist. Dadurch wird eine zuverlässige Entleerung des Speicherraumes gewährleistet, indem die aus der Aufnahmemulde herausgehobenen Stückgüter in der Leerstellung von der konvexen Oberfläche des Auflageorgans in Richtung Übernahmebereich abrutschen.

Das Auflageorgan kann im Zusammenspiel mit dem Hebeorgan auch als Bremse für die von der Förderschale abrutschenden Stückgüter dienen, indem die Stückgüter auf das konvex gekrümmte Auflageorgan auflaufen. Die konvex gekrümmte Kontaktfläche des Hebeorgans kann hierzu nachgiebig ausgebildet sein, so dass dieses den Aufprall der auflaufenden Stückgüter sogar dämpft.

Das flexible, flächenförmige Auflageorgan kann bandförmig bzw. bandartig sein. Das Auflageorgan kann ein Band, eine Folie, eine Matte, ein Gurt oder ein Netz sein.

Das flexible, flächenförmige Auflageorgan kann ein textiles Flächengebilde, wie Gewebe sein. Das Auflageorgan kann z. B. als Tuch ausgebildet sein.

Das flexible, flächenförmige Auflageorgan kann auch aus miteinander verketteten Elementen sein, und z. B. als Mattenkette vorliegen.

Das flexible, flächenförmige Auflageorgan kann aus Kunststoff bestehen. Das Auflageorgan kann ein Elastomer enthalten oder aus diesem bestehen. Das Auflageorgan kann aus einem faserverstärkten Kunststoff bestehen. Das Auflageorgan kann auch aus einem Drahtgeflecht bestehen.

Das Auflageorgan kann ganz allgemein und im Speziellen im Zusammenhang mit der zweiten Erfindungsvariante elastisch ausgebildet sein, derart sich das Auflageorgan durch die Gewichtskraft der in der Aufnahmemulde zwischengespeicherten Stückgüter unter Vergrösserung des Speicherraums bzw. der Muldentiefe elastisch dehnt.

Entsprechend verkürzt sich das elastische Auflageorgan gemäss dieser Weiterbildung durch die Gewichtsentlastung beim Anheben durch das Hebeorgan unter Verkleinerung des Speicherraums bzw. der Muldentiefe elastisch.

Die Puffervorrichtung enthält insbesondere seitlich vom Auflageorgan angeordnete Rückhalteorgane zum seitlichen Zurückhalten der Stückgüter in der Aufnahmemulde.

Die Aufnahmemulde bildet zusammen mit den seitlichen Rückhalteorganen den Speicherraum für die Stückgüter aus.

Die Übernahmeeinrichtung kann eine in Prozessrichtung der Puffervorrichtung vorgelagerte Zuführvorrichtung mit einer Förderrutsche umfassen, über welche die Stückgüter an der Abgabestelle mittels Schwerkraftunterstützung der Puffervorrichtung zugeführt werden.

Die Stückgüter werden an der Abgabestelle insbesondere von einem Sortierförderer, insbesondere von den Förderschalen eines Sortierförderers der Puffervorrichtung zugeführt.

Es kann aber auch vorgesehen sein, dass die Puffervorrichtung bzw. deren Auflageorgan bzw. die aus diesem geformte Aufnahmemulde an der Abgabestelle unmittelbar seitlich an den Sortierförderer bzw. an dessen Förderschalen anschliesst bzw. angrenzt, so dass die an der Abgabestelle vom Sortierförderer, insbesondere von Förderschalen des Sortierförderers, abgegebenen Stückgüter mittels Schwerkraftunterstützung direkt auf das Auflageorgan bzw. in die Aufnahmemulde der Puffervorrichtung rutschen bzw. fallen. So erhalten die Stückgüter in der Regel genügend kinetische Energie, um mittels Schwerkraftunterstützung vom Sortierförderer, insbesondere von den seitlich gekippten Förderschalen abzurutschen und direkt in die Aufnahmemulde der Puffervorrichtung zu fallen.

Die Puffervorrichtung weist in dieser Ausführung insbesondere seitlich vom Auflageorgan angeordnete Rückhalteorgane zum seitlichen Zurückhalten der ungeführt in die Aufnahmemulde abgegebenen Stückgüter auf.

Der Übernahmebereich kann zum Beispiel ein Sammelbereich sein, in welchem die Stückgüter für die Weiterverarbeitung gesammelt werden. Der Sammelbereich enthält eine Sammelvorrichtung, wie z. B. einen Sammeltisch oder ein Sammelbehälter. Die Stückgüter können für die Weiterverarbeitung z. B. von Bedienpersonal von Hand dem Sammeltisch entnommen werden.

Der Übernahmebereich kann auch durch einen Übernahmeförderer ausgebildet werden, welcher die abgegebenen Stückgüter zur Weiterförderung übernimmt. Die Stückgüter können durch Bedienpersonal von Hand oder automatisiert an den Übernahmeförderer übergeben werden.

Der Übernahmebereich kann auch ganz allgemein eine Verarbeitungseinrichtung sein, in welcher die abgegebenen Stückgüter weiterverarbeitet werden.

Die Erfindung betrifft des Weiteren eine Sortieranlage mit einem Sortierförderer und mit mindestens einer Abgabestelle, sowie mit einer an der mindestens einen Abgabestelle angeordneten, erfindungsgemässen Übernahmeeinrichtung, wie sie oben beschrieben ist. Die mindestens eine Abgabestelle ist insbesondere seitlich vom Sortierförderer bzw. seitlich von der Förderbahn des Sortierförderers angeordnet.

Die Sortieranlage enthält insbesondere eine Mehrzahl von entlang der Förderbahn des Sortierförderers angeordnete Abgabestellen, an welchen jeweils eine erfindungsgemässe Übernahmeeinrichtung gemäss obiger Beschreibung angeordnet ist. Die Abgabestellen sind insbesondere beidseitig vom Sortierförderer bzw. von dessen Förderbahn angeordnet. Die Abgabestellen sind insbesondere in einer Abgabezone angeordnet.

Der Sortierförderer kann z. B. eine Mehrzahl von Fördermitteln enthalten, welche jeweils ein oder mehrere Stückgüter fördern. Der Sortierförderer kann z. B. ein Kippschalenförderer sein. Die Fördermittel sind hier Kippschalen, welche zur Abgabe der Produkte an den jeweiligen Abgabestellen in Förderrichtung betrachtet seitlich gekippt bzw. geschwenkt werden.

Der Förderer kann auch ein Greiferförderer sein, bei welchem die Stückgüter an der mindestens einen Abgabestelle aus dem Greifer entlassen werden. Der Förderer kann auch ein Taschenförderer sein, bei welchem die Stückgüter an der mindestens einen Abgabestelle durch Kippen der Fördertaschen abgegeben werden.

Der Förderer kann ferner auch ein Bandförderer, wie Modulbandförderer, mit Ausschleusstationen zum Ausschleusen der Stückgüter an den entsprechenden Abgabestellen sein. Der Förderer kann auch ein Quergurtförderer sein.

Die Erfindung betrifft auch ein Verfahren zum Übernehmen von an einer Abgabestelle einer Sortieranlage durch einen Sortierförderer abgegebene Stückgüter durch eine Übernahmeeinrichtung wie oben beschrieben

Das Verfahren weist folgende Schritte auf:
- Abgeben eines Stückgutes an der Abgabestelle;
- Übernehmen des abgegebenen Stückgutes durch die Übernahmeeinrichtung.

Das erfindungsgemässe Verfahren zeichnet sich dadurch aus, dass das Stückgut in die Aufnahmemulde der Puffervorrichtung bewegt und in der Aufnahmemulde zwischengespeichert wird.

Zur Zwischenspeicherung von mehreren Stückgütern wird die Tiefe der Aufnahmemulde und dadurch der Speicherraum in oben beschriebener Weise durch den Verstellmechanismus angepasst.

Zur Weiterförderung des bzw. eines Stückgutes wird die Tiefe der Aufnahmemulde und dadurch der Speicherraum in oben beschriebener Weise durch den Verstellmechanismus verkleinert, wobei das Stückgut hierdurch in Prozessrichtung aus der Aufnahmemulde herausbewegt wird.

Gemäss einer Weiterbildung des Verfahrens wird der Auflageabschnitt des Auflageorgans vorgezogen, wodurch die Tiefe der Aufnahmemulde unter Verkleinerung des Speicherraums verkleinert wird und das Stückgut in der Folge über den Muldenausgang aus der Aufnahmemulde heraus und auf dem vorgezogenen Auflageabschnitt in Prozessrichtung, insbesondere in einen Übernahmebereich, bewegt wird.

Der Verstellmechanismus wird insbesondere durch eine Steuerungseinrichtung gesteuert. Die Steuerung des Verstellmechanismus erfolgt insbesondere in Abhängigkeit von der in einem Zeitraum an der betreffenden Abgabestelle abgegebenen Menge bzw. Anzahl an Stückgütern.

Die erfindungsgemässe Übernahmeeinrichtung kann bei der Sortierung von Sendungen, wie Paketen in einem Verteilzentrum, z. B. einen Postverteilzentrum Anwendung finden.

Die erfindungsgemässe Übernahmeeinrichtung kann bei der Kommissionierung von Kundenbestellungen in einem Logistikzentrum Anwendung finden.

Die erfindungsgemässe Übernahmeeinrichtung kann z. B. auch bei der Verarbeitung von Produktrückläufen von Verkaufsstellen Verwendung finden. Solche Produktrückläufe finden beispielsweise bei Rückrufaktionen, Kundenrückgaben, beim Abbau von Lagerbeständen oder bei Sortimentswechsel statt. In der Regel werden die Stückgüter, d.h. die Produkte, unsortiert von den Verkaufsstellen zurückgegeben. Mittels der Sortieranlage werden nun die Produkte wieder sortenrein bzw. nach bestimmten gemeinsamen Merkmalen sortiert.

Die Stückgüter, auch Fördergüter genannt, können z. B. Pakete sein.

Die Stückgüter können Produkte aus dem Konsumgüterbereich sein, wie z. B. Kosmetikartikel, Körperpflegeartikel, Medikamente, Nahrungsmittel, Kleider, Haushaltsartikel, etc.

Die Stückgüter bzw. Produkte können als Flaschen, Dosen, Tuben, Beutel, Schachteln, Boxen, etc. vorliegen. Die Produkte können in Verkaufspackungen verpackt sein.

Dank der erfindungsgemässen Puffervorrichtung können die vom Sortierförderer abgegebenen Stückgüter vor Erreichen des Übernahmebereichs gepuffert, d.h. zwischengespeichert werden. Dadurch kann verhindert werden, dass zu viele Stückgüter, welche die Verarbeitungskapazität im Übernahmebereich überschreiten, in den Übernahmebereich befördert werden.

Durch die dynamische Anpassung des Speicherraums der Puffervorrichtung während des Betriebs der Sortieranlage lässt sich einerseits der Speicherraum an die Menge der abgegebenen Stückgüter anpassen. Andererseits lassen sich durch die dynamische Verkleinerung des Speicherraums einzelne oder Gruppen von Stückgütern aus dem Speicherraum heraus in Richtung Übernahmebereich bewegen. Dies, ohne dass hierzu zwingend eine zusätzliche Fördervorrichtung notwendig wäre.

Im Folgenden wird der Erfindungsgegenstand anhand von Ausführungsbeispielen, welche in den beiliegenden Figuren dargestellt sind, näher erläutert. Es zeigen jeweils schematisch:
- Figur 1: eine Draufsicht einer Sortieranlage;
- Figur 2a, 2b: Seitenansichten einer ersten Ausführungsform einer Übernahmeeinrichtung;
- Figur 3: eine Seitenansicht einer weiteren Ausführungsform einer Übernahmeeinrichtung;
- Figur 4: eine Seitenansicht einer weiteren Ausführungsform einer Übernahmeeinrichtung;
- Figur 5: eine Seitenansicht einer weiteren Ausführungsform einer Übernahmeeinrichtung;
- Figur 6: eine Seitenansicht einer weiteren Ausführungsform einer Übernahmeeinrichtung;
- Figur 7: eine Seitenansicht einer weiteren Ausführungsform einer Übernahmeeinrichtung;
- Figur 8: eine Seitenansicht einer weiteren Ausführungsform einer Übernahmeeinrichtung.

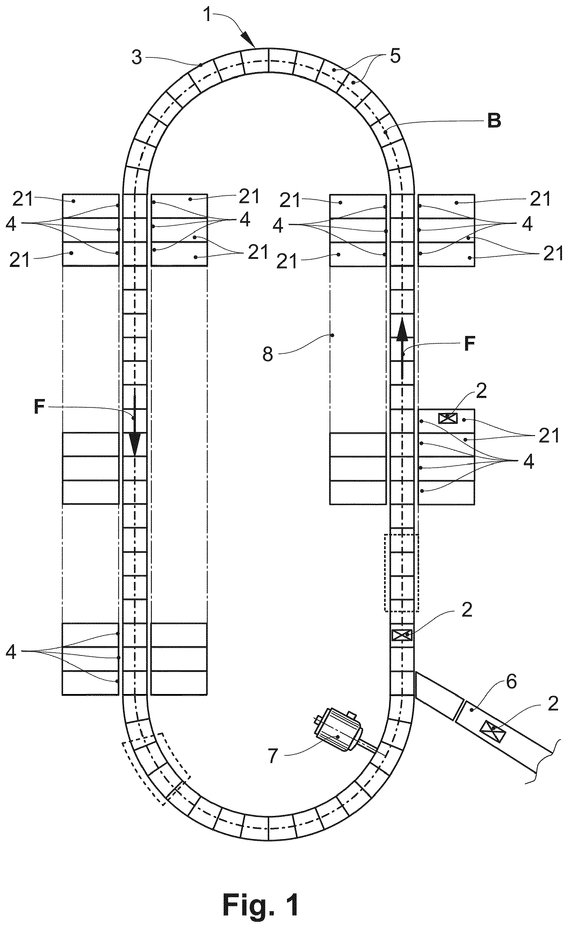

Die Sortieranlage 1 gemäss **Figur 1** umfasst einen über einen Antrieb 7 angetriebenen Sortierförderer 3 in der Ausführung eines Kippschalenförderers mit einer Mehrzahl von entlang einer Förderbahn B bewegbaren Kippschalen 5. Die miteinander verketteten Kippschalen 5 werden von einer in einem Förderkanal geführten Förderkette angetrieben.

Ein Zuförderer 6 fördert die zu sortierenden Stückgüter 2 zum Kippschalenförderer 3 und übergibt die Stückgüter 2 in die Kippschalen 5 des Kippschalenförderers 3. Die Kippschalen 5 mit den darin geförderten Stückgüter 2 werden in Förderrichtung F entlang von beidseitig seitlich angeordneten Abgabestellen 4 durch eine Abgabezone 8 bewegt.

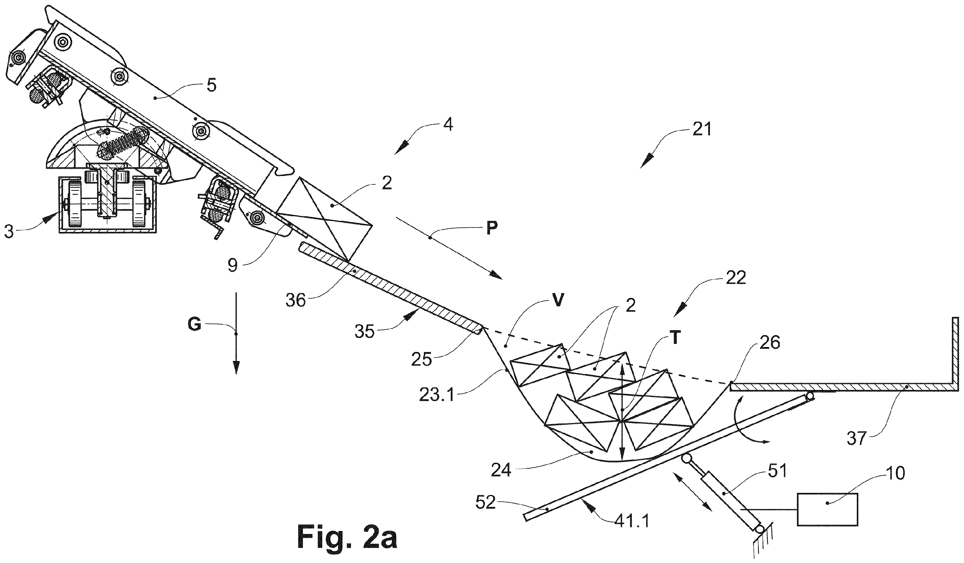

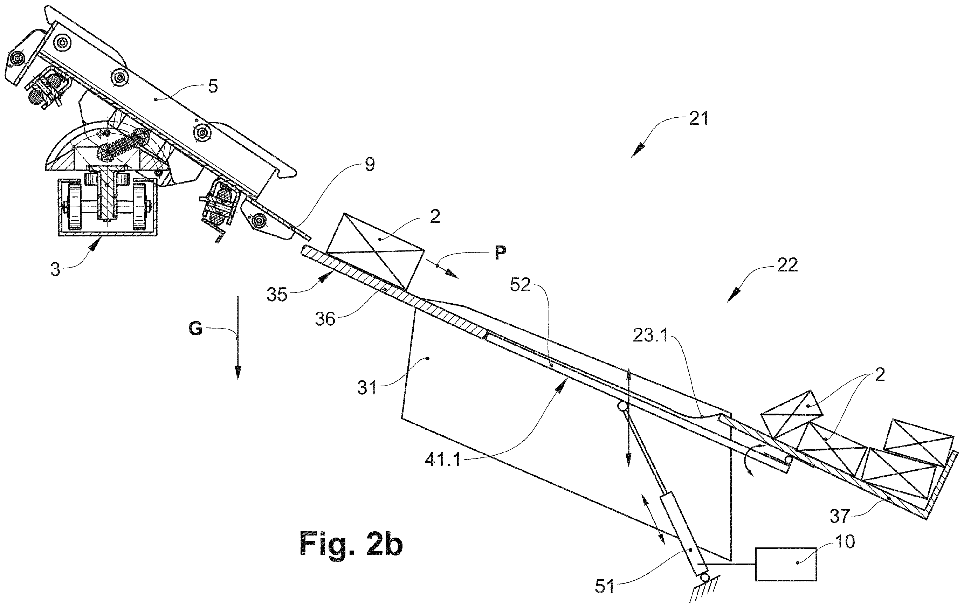

Die Stückgüter 2 werden, wie in den Figuren 2 bis 8 gezeigt, durch seitliches Kippen der Kippschalen 5 des Kippschalenförderer 3 an der vorgesehenen Abgabestelle 4 abgegeben und einer Übernahmeeinrichtung 21 übergeben. Hierzu rutscht das Stückgut 2 mit Schwerkraftunterstützung von der seitlich gekippten Förderschale 5 über eine heruntergeschwenkte Seitenwand 9 der Förderschale 5 in Richtung Übernahmeeinrichtung 21 ab.

Selbstverständlich kann anstelle eines Kippschalenförderers 3 auch ein anderer Förderer wie z. B. ein Greiferförderer, ein Taschenförderer, Quergurtförderer oder ein Bandförderer vorgesehen sein (nicht gezeigt).

Gemäss den Ausführungsformen nach Figur 2 bis 4 und 6 bis 8 rutschen die Stückgüter 2 nach Verlassen der Kippschale 5 in Prozessrichtung P mit Schwerkraftunterstützung über die Förderrutsche 36 einer Zufördervorrichtung 35 zu einer Puffervorrichtung 22 der Übernahmeeinrichtung 21 hin ab. Die Puffervorrichtung 22 schliesst unmittelbar an die Förderrutsche 36 an.

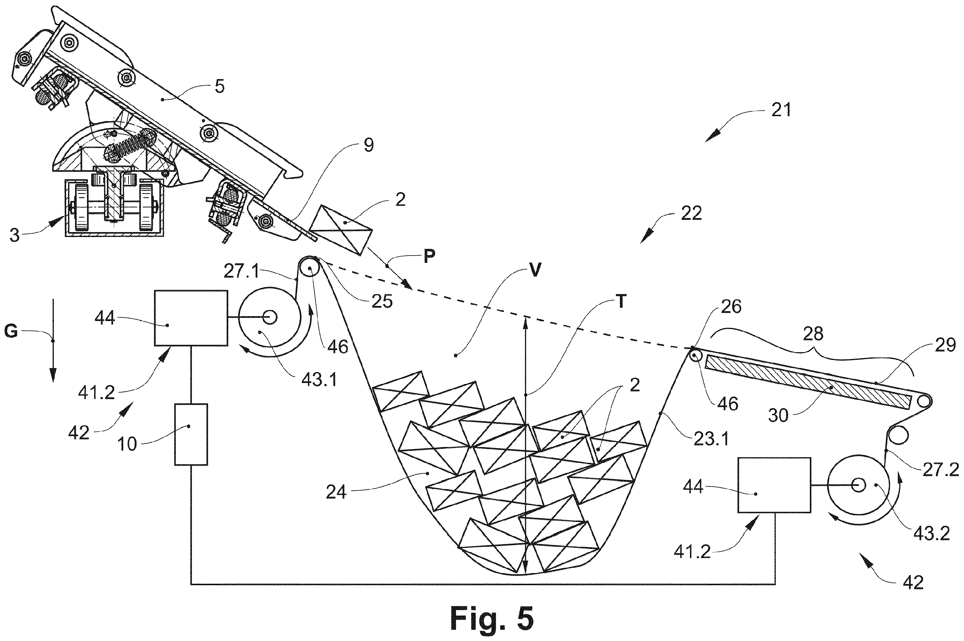

Gemäss der Ausführungsform nach Figur 5 rutschen die Stückgüter 2 in Prozessrichtung P mit Schwerkraftunterstützung direkt von der Förderschale 5 über die heruntergeschwenkte Seitenwand 9 zur Puffervorrichtung 22 der Übernahmeeinrichtung 21 hin ab.

Die Prozessrichtung P wiedergibt die Bewegung der Stückgüter 2 durch die Übernahmeeinrichtung 21.

Die Puffervorrichtung 22 umfasst ein flächenförmiges, flexibles Auflageorgan 23.1, 23.2, z. B. in Form eines Bandes. Das Auflageorgan 23.1, 23.2 ist zur Ausformung einer Aufnahmemulde 24 ausgelegt, wobei die Aufnahmemulde 24 einen Speicherraum V zur Zwischenspeicherung von abgegebenen Stückgütern 2 ausbildet. Die Aufnahmemulde 23.1, 23.2 wird in einem Abschnitt zwischen einem Muldeneingang 25 und einem Muldenausgang 26 ausgebildet, in welchem das Auflageorgan 23.1, 23.2 frei hängend ist. Der durch die Aufnahmemulde 24 ausgebildete Speicherraum V wird seitlich durch Rückhalteorgane 31 begrenzt (siehe Figur 2b). Die seitlichen Rückhalteorgane 31 können z. B. Seitenwände sein.

Die Puffervorrichtung 22 enthält ferner einen Verstellmechanismus 41.1-41.3, mittels welchem das Auflageorgan 23.1, 23.2 zwischen einer Speicherstellung, in welcher das Auflageorgan 23.1, 23.2 eine Aufnahmemulde 24 mit einem einstellbaren Speicherraum V zur Zwischenspeicherung von mindestens einem Stückgut 2 ausbildet und einer Leerstellung, in welcher das Auflageorgan 23.1, 23.2 keinen Speicherraum V zur Zwischenspeicherung von Stückgütern 2 ausbildet, verstellt werden kann. Über den Verstellmechanismus 41.1-41.3 lässt sich insbesondere die Tiefe (T) der Aufnahmemulde 24 und somit die Grösse des Speicherraums V einstellen.

Die Einstellung der Grösse des Speicherraums V, welche auch die Einnahme der Leerstellung beinhaltet, geschieht dynamisch über eine Steuerungseinrichtung 10 in Abhängigkeit von der Anzahl abgegebener Stückgüter 2 in einem Zeitraum und der Weiterverarbeitungskapazität im Übernahmebereich. Übersteigt beispielsweise die Anzahl an abgegebenen Stückgüter 2 in einem Zeitraum die Weiterverarbeitungskapazität im Übernahmebereich, so werden die überzähligen Stückgüter 2 in der Puffervorrichtung 22 zwischengespeichert bzw. gepuffert. Sobald die Weiterverarbeitungskapazität im Übernahmebereich grösser ist als die im selben Zeitraum abgegebenen Anzahl Stückgüter 2, werden Stückgüter 2 durch Verkleinerung des Speicherraums V aus dem der Puffervorrichtung 22 entlassen und in den Übernahmebereich gefördert.

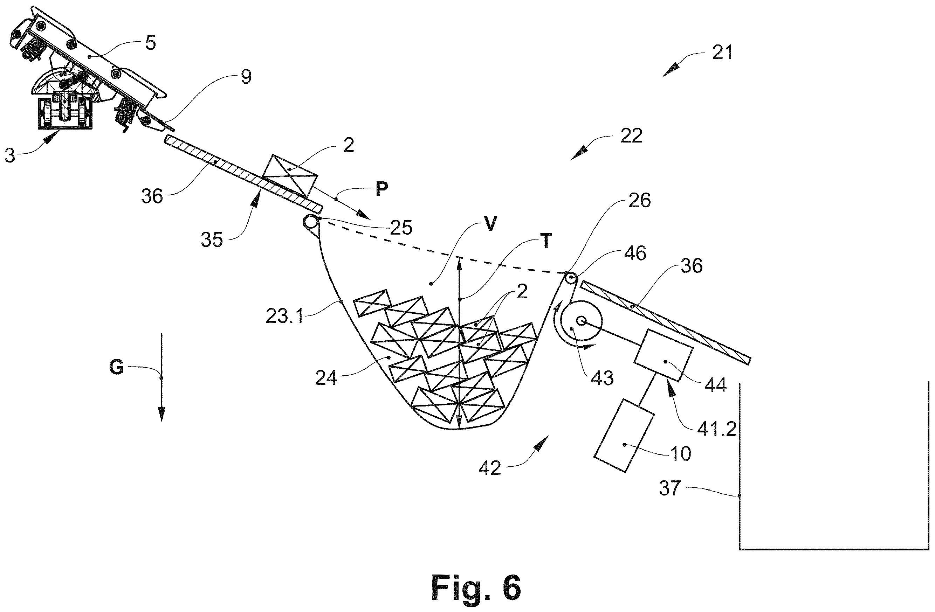

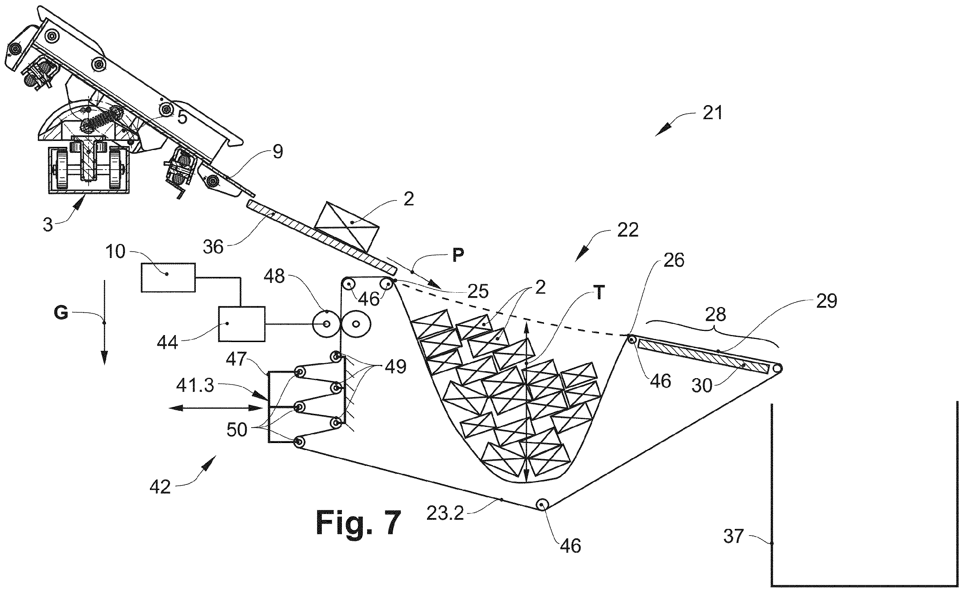

Die Stückgüter 2 werden also von den Förderschalen 5 in Prozessrichtung P entweder über eine Zwischenspeicherung in der Puffervorrichtung 22 oder ohne Zwischenspeicherung direkt in den Übernahmebereich der Übernahmeeinrichtung 21 weitergefördert bzw. weiterbewegt. Der Übernahmebereich kann z. B. ein Sammelbereich mit einer Sammelvorrichtung 37 sein, in welchem die abgegebenen Stückgüter 2 zur Weiterverarbeitung gesammelt werden. In den Ausführungsformen gemäss den Figuren 2 bis 3 und 8 ist die Sammelvorrichtung als schräg gestellter Sammeltisch 37 ausgebildet. In den Ausführungsformen gemäss den Figuren 6 und 7 ist die Sammelvorrichtung ein Sammelbehälter 37.

Die Stückgüter 2 können z. B. durch Bedienpersonal von Hand aus der Sammelvorrichtung 37 entnommen und der Weiterverarbeitung zugeführt werden. Alternativ können die Stückgüter 2 auch in einem automatisierten Prozess vom Übernahmebereich einer Weiterverarbeitung zugeführt werden.

Gemäss der Ausführungsform nach **Figur 2a** **und** **2b** umfasst der Verstellmechanismus 41.1 eine Hebekonfiguration mit einem Hebeorgan 52 und einem Mechanismus 51 zum Anheben und Absenken des Hebeorgans 52. Der Mechanismus 51 zum Anheben und Absenken des Hebeorgans 52 ist als Pneumatikzylinder ausgebildet, dessen Kolben beim Ausfahren das Hebeorgan 52 anhebt und beim Einfahren das Hebeorgan 52 absenkt. Der Pneumatikzylinder wird über die Steuerungseinrichtung 10 gesteuert.

Das Hebeorgan 52 ist als Hebeplatte ausgebildet, welche unterhalb des Auflageorgans 23.1 angeordnet ist. Durch Anheben des Hebeorgans 52 wird auch das Auflageorgan 23.1 flächig angehoben, wobei die die Tiefe T der Aufnahmemulde 24 und somit der Speicherraum V verkleinert wird.

In einer Leerstellung des Hebeorgans 52 liegt das Auflageorgan 23.1 grossflächig dem plattenförmigen Hebeorgan 52 auf und bildet eine in Prozessrichtung P nach unten geneigte, ebene Gleitfläche für die Stückgüter 2 aus. Das Auflageorgan 23.1 bildet also in Leerstellung des Hebeorgans 52 keine Aufnahmemulde 24 und entsprechend keinen Speicherraum V für die abgegebenen Stückgüter 2 aus. Die von der Förderschale 5 abrutschenden Stückgüter 2 gleiten vielmehr direkt über die vom Auflageorgan 23.1 ausgebildete Gleitfläche zum Sammeltisch 37 im Sammelbereich.

Das Auflageorgan 23.1 ist elastisch ausgebildet. Zur Ausbildung eines Speicherraums V zwecks Zwischenspeicherung von Stückgütern 2 wird das Hebeorgan 52 abgesenkt, wodurch sich das Auflageorgan 23.1 durch die Last der auf dieses geförderten Stückgüter 2 unter Ausbildung einer Aufnahmemulde 24 elastisch nach unten ausdehnt. Zur Entlassung von Stückgütern 2 aus dem Speicherraum V wird das Hebeorgan 52 angehoben, wobei sich das elastische Auflageorgan 23.1 unter Verkleinerung des Speicherraums V zusammenzieht. Dadurch werden die obersten Stückgüter 2 aus dem Speicherraum V ausgeschieden und in Prozessrichtung P zur Sammelvorrichtung 37 gefördert.

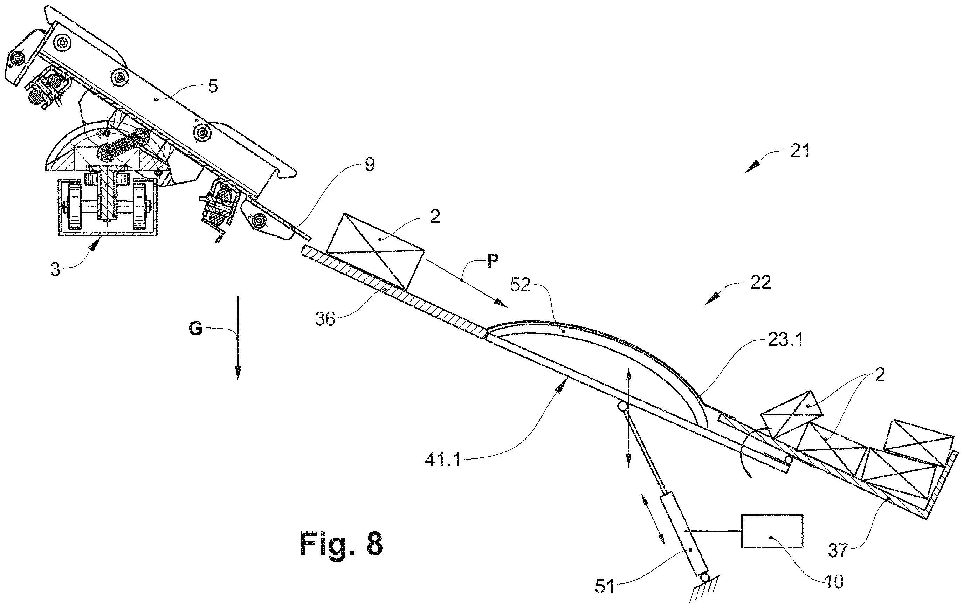

Die Figur 8 zeigt eine Abwandlung eines Hebeorgans 52. Dieses weist zum Auflageorgan 23.1 hin eine konvexe Erhebung auf, so dass das Auflageorgan 23.1 in der Leerstellung des Hebeorgans 52 nach oben gewölbt ist. Dadurch wird eine zuverlässige Entleerung des Speicherraumes V gewährleistet, indem die aus der Aufnahmemulde 24 herausgehobenen Stückgüter 2 in der Leerstellung von der konvexen Oberfläche des Auflageorgans 23.1 in Richtung Sammelvorrichtung 37 abrutschen.

Die konvexe Erhebung kann überdies auch eine Bremswirkung auf die von der Förderschale 5 abrutschenden Stückgüter 2 ausüben, welche sonst, wie in der Ausführungsform gemäss Figur 2b gezeigt, direkt und ungebremst zur Sammelvorrichtung 37 durchrutschen.

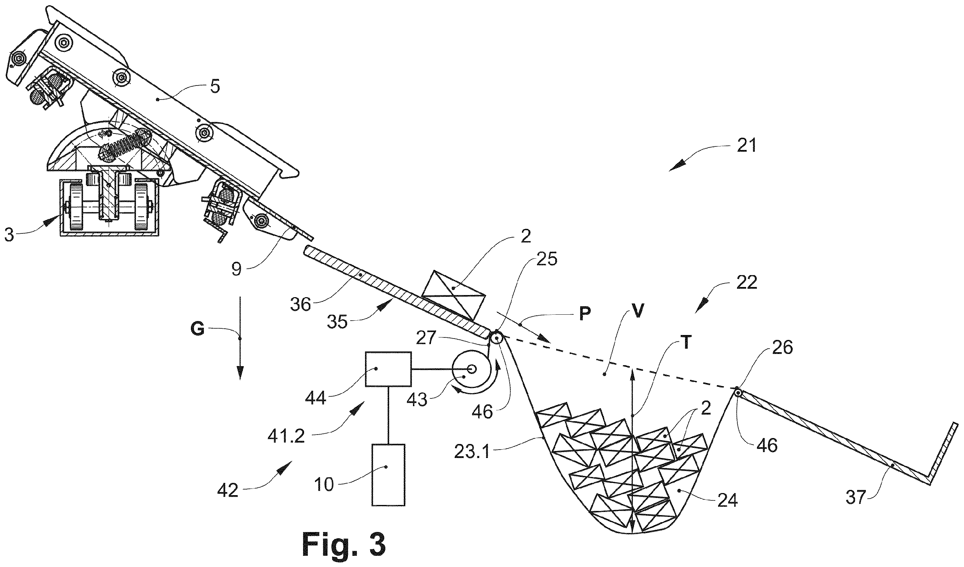

Gemäss der Ausführungsform nach **Figur 3 bis 6** wird die Grösse bzw. Tiefe T der Aufnahmemulde 24 und somit die Grösse des Speicherraums V über die Veränderung der Länge des Auflageorgans 24 zwischen dem Muldeneingang 25 und dem Muldenausgang 26 gesteuert. Je kürzer diese Länge ist desto geringer ist auch die Tiefe T der Aufnahmemulde 24 und desto kleiner ist entsprechend die Aufnahmemulde 24 und damit der Speicherraum V. In einer Leerstellung bildet das Auflageorgan 23.1 zwischen Muldeneingang 25 und Muldenausgang 26 eine ebene Auflagefläche bzw. Gleitfläche und somit keine Aufnahmemulde 24 mehr aus.

Der Verstellmechanismus 41.1 enthält eine Speicherkonfiguration 42 zur Zwischenspeicherung eines Längenabschnittes des Auflageorgans 23.1 zwecks Verkürzung der Länge des Auflageorgans 24 zwischen dem Muldeneingang 25 und dem Muldenausgang 26.

Die Speicherkonfiguration 42 enthält hierzu ein Speichermittel in Ausbildung eines Auf- und Abwickelkörpers 43. Gemäss Figur 3 ist ein dem Muldeneingang 25 vorgelagerter Endabschnitt 27 des Auflageorgans 23.1 mit dem Auf- und Abwickelkörper 43 verbunden. Das Auflageorgan 23.1 ist hierzu am Muldeneingang 25 über eine Umlenkrolle 46 zum Auf- und Abwickelkörper 43 hin umgelenkt. Der Auf- und Abwickelkörper 43 wird über einen Antrieb 44 angetrieben.

Gemäss Figur 6 ist ein dem Muldenausgang 26 nachgelagerter Endabschnitt 27 des Auflageorgans 23.1 mit dem Auf- und Abwickelkörper 43 verbunden. Das Auflageorgan 23.1 ist hierzu am Muldenausgang 26 über eine Umlenkrolle 46 zum Auf- und Abwickelkörper 43 hin umgelenkt. Die Funktionsweise der Speicherkonfiguration gemäss der Figur 6 entspricht jedoch jener nach Figur 3.

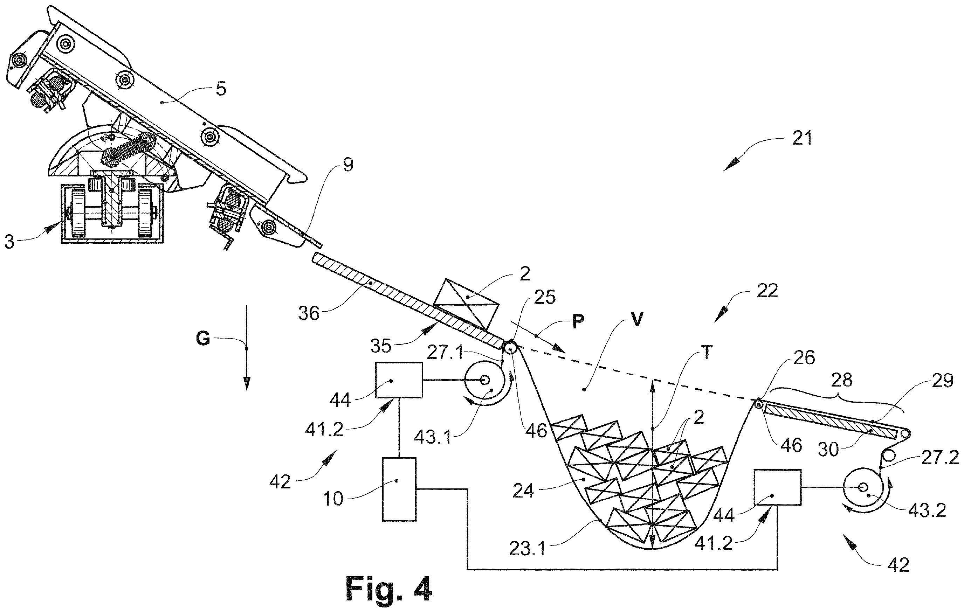

Gemäss Figur 4 und 5 ist sowohl ein dem Muldeneingang 25 vorgelagerter Endabschnitt 27.1 des Auflageorgans 23.1 als auch ein dem Muldenausgang 26 nachgelagerter Endabschnitt 27.2 des Auflageorgans 23.1 jeweils mit einem Auf- und Abwickelkörper 43.1, 43.2 verbunden. Der Einsatz von zwei Auf- und Abwickelkörpern 43.1, 43.2 erlaubt eine schnellere Verkürzung bzw. Verlängerung der Länge des Auflageorgans 23.1 zwischen Muldeneingang 25 und Muldenausgang 26. Zudem lässt sich durch einen individuellen Antrieb der beiden Auf- und Abwickelkörper 43.1, 43.2 die Ausgabe von einzelnen Stückgütern 2 aus dem Speicherraum V bzw. der Aufnahmemulde 24 besser steuern. Ansonsten entspricht die Funktionsweise der Speicherkonfiguration gemäss der Figur 4 und 5 jener nach Figur 3 und 6.

Die Ausführungsform nach Figur 5 zeigt noch einen weiteren bedeutsamen Aspekt der vorliegenden Erfindung, dessen Grundprinzip auch in der Ausführungsform nach Figur 7 umgesetzt ist.

So bildet das Auflageorgan 23.1, 23.2 einen in Prozessrichtung P an den Muldenausgang 26 anschliessenden Auflageabschnitt 28 mit einer Auflagefläche 29 für die aus der Aufnahmemulde 24 entlassenen Stückgüter 2 aus. Die Auflagefläche 29 ist eben ausgebildet und verläuft in Prozessrichtung P geneigt nach unten. Der Auflageabschnitt 28 wird von unten durch ein flächiges Stützorgan 30, wie z. B. eine Stützplatte gestützt. Damit wird ein Durchhängen des Auflageorgans 23.1, 23.2 bei einer Gewichtsbelastung mit Stückgütern 2 verhindert. Dies ist insbesondere dann von Bedeutung, wenn das Auflageorgan 23.1, 23.2 in der oben beschriebenen Art elastisch ausgebildet ist.

Das Auflageorgan 23.1, 23.2 wird am Muldenausgang 26 über eine Umlenkrolle 46 aus der Aufnahmemulde 24 in den Auflageabschnitt 28 umgelenkt.

Der Verstellmechanismus 41.2, 41.3 mit der Speicherkonfiguration ist nun so ausgebildet, dass die Länge des Auflageorgans 23.1, 23.2 zwischen dem Muldeneingang 25 und dem Muldenausgang 26 verkürzt werden kann, indem der Auflageabschnitt 28 des Auflageorgans 23.1, 23.2 über den Verstellmechanismus 41.2, 41.3 vorgezogen, d.h. in Prozessrichtung P bewegt wird.

Dies erfolgt gemäss Figur 5 indem ein in Prozessrichtung P dem Auflageabschnitt 28 nachgelagerter Endabschnitt 27 des Auflageorgans 23.1 am Auf- und Abwickelkörper 43 angeordnet ist. Durch den Aufwickelvorgang wird eine Zugkraft in Prozessrichtung P auf den Auflageabschnitt 28 ausgeübt wodurch der Auflageabschnitt 28 unter Verkleinerung der Aufnahmemulde 24 vorgezogen wird.

Durch das Vorziehen des Auflageabschnitt 28 und der damit verbundenen Verkleinerung des Speicherraums V werden einzelne Stückgüter 2 über den Muldenausgang 26 aus der Aufnahmemulde 24 heraus und auf dem durch das Vorziehen mitbewegten Auflageabschnitt 28 in Prozessrichtung P, d.h. in Richtung Übernahmebereich bewegt. Das Vorziehen des Auflageabschnittes 28 bewirkt also eine förderaktive Bewegung der auf dem Auflageabschnitt 28 liegenden Stückgüter 2.

Gemäss der Ausführungsform nach Figur 7 ist das Auflageorgan endlos ausgebildet. Entsprechend ist das Auflageorgan unter anderem um Umlenkrollen 46 geführt.

Auch hier wird der Auflageabschnitt 28 durch einen entsprechenden Antrieb des umlaufenden Auflageorgans 23.2 vorgezogen, so dass die aus dem Speicherraum V entlassenen Stückgüter 2 wie oben beschrieben auf dem Auflageabschnitt 28 in Prozessrichtung P mit bewegt werden.

Gemäss dieser Ausführungsform wird das Speichermittel allerdings durch einen Schlaufenspeicher 47 ausgebildet. Hierzu ist das Auflageorgan 23.2 ausserhalb des Längenabschnittes zwischen Muldeneingang 25 und Muldenausgang 26 schlaufenartig um Umlenkrollen 49, 50 geführt. Der Schlaufenspeicher 47 enthält einen ersten Satz von ortsfesten Umlenkrollen 49 sowie einen zweiten Satz mit jeweils versetzt gegenüber den ortsfesten Umlenkrollen 49 angeordneten verschiebbaren Umlenkrollen 50. Durch Verschieben des zweiten Satzes von Umlenkrollen 50 gegenüber dem ersten Satz von Umlenkrollen 49, lassen sich die Schlaufen des um die Umlenkrollen 49, 50 geführten Auflageorgans 23.2 vergrössern bzw. verkleinern. Entsprechend wird die Länge des Auflageorgans 23.2 zwischen Muldeneingang 25 und Muldenausgang 26 verkürzt bzw. verkleinert.

Das Auflageorgan 23.2 wird zum Verändern seiner Länge zwischen dem Muldeneingang 25 und dem Muldenausgang 26 über eine Antriebsanordnung 48 angetrieben. Die Antriebsanordnung 48 enthält hierzu ein Klemmwalzenpaar, durch welche das flächenförmige Auflageorgan 23.2 reibschlüssig hindurchgeführt ist. Das Klemmwalzenpaar wird durch einen Antrieb 44 angetrieben. Die Antriebsanordnung 48 dient auch zum Bremsen des Auflageorgans 23.2 bzw. Klemmen des Auflageorgans 23.2 in einer Ruhestellung bzw. beim Vergrössern des Speicherraums V. Die Antriebsanordnung 48 wird über eine Steuerungseinrichtung 10 gesteuert.

## Patentansprüche

1. **Übernahmeeinrichtung** (21) für eine Sortieranlage (1) zur Übernahme von Stückgütern (2), welche von einem Sortierförderer (3) an einer Abgabestelle (4) abgegeben werden, enthaltend eine, einen Speicherraum (V) ausbildende Puffervorrichtung (22) zum Zwischenspeichern bzw. Puffern von abgegebenen Stückgütern (2), wobei die Grösse des Speicherraums (V) der Puffervorrichtung (22) während des Betriebs der Sortieranlage (1) einstellbar ist,
**dadurch gekennzeichnet, dass**
die Puffervorrichtung (22) ein flexibles, flächenförmiges Auflageorgan (23.1, 23.2) umfasst, welches zum Zwischenspeichern von Stückgütern (2) eine den Speicherraum (V) nach unten begrenzende Aufnahmemulde (24) für die Stückgüter (2) ausbildet, und die Puffervorrichtung (22) einen Verstellmechanismus (41.1-41.3) zum Verstellen der Tiefe (T) der Aufnahmemulde (24) zwecks Einstellen der Grösse des Speicherraums (V) enthält.

2. Übernahmeeinrichtung nach Anspruch 1, **dadurch gekennzeichnet, dass** der Verstellmechanismus (41.1-41.3) dazu ausgelegt ist, die Länge des Auflageorgans (23.1, 23.2) zwischen einem Muldeneingang (25) und einem Muldenausgang (26) der Auflagemulde (24) zu verändern und der Verstellmechanismus (41.1, 41.3) insbesondere eine Speicherkonfiguration (42) zur Speicherung eines Längenabschnittes (A) des Auflageorgans (23.1, 23.2) enthält.

3. Übernahmeeinrichtung nach Anspruch 2, **dadurch gekennzeichnet, dass** die Speicherkonfiguration (42) zum dynamischen Zwischenspeichern eines Längenabschnittes des Auflageorgans (23.1, 23.2) eines der folgenden Speichermittel enthält:
- einen Schlaufenspeicher (47);
- Tänzerrollen.

4. Übernahmeeinrichtung nach einem der Ansprüche 1 bis 3, **dadurch gekennzeichnet, dass** die Aufnahmemulde (24) zwischen einem Muldeneingang (25) und einem Muldenausgang (26) ausgebildet wird, und ein in Prozessrichtung (P) an den Muldenausgang (26) anschliessender Auflageabschnitt (28) des Auflageorgans (23.1, 23.2) eine Auflagefläche (29) für die aus der Aufnahmemulde (24) entlassenen Stückgüter (2) ausbildet, und die Länge des Auflageorgans (23.1, 23.2) zwischen dem Muldeneingang (25) und dem Muldenausgang (26) verkürzt werden kann, indem der Auflageabschnitt (28) mittels Verstellmechanismus (41.1-41.3) in Prozessrichtung vorgezogen wird.

5. Übernahmeeinrichtung nach Anspruch 4, **dadurch gekennzeichnet, dass** die Auflagefläche (29) des Auflageabschnittes (28) eben und insbesondere geneigt oder horizontal ist.

6. Übernahmeeinrichtung nach Anspruch 4 oder 5, **dadurch gekennzeichnet, dass** durch das Vorziehen des Auflageabschnitt (28) und der damit verbundenen Verkleinerung des Speicherraums (V) einzelne Stückgüter (2) über den Muldenausgang (26) aus der Aufnahmemulde (24) heraus und auf dem Auflageabschnitt (28) in Prozessrichtung (P) bewegbar sind.

7. Übernahmeeinrichtung nach einem der Ansprüche 1 bis 6, **dadurch gekennzeichnet, dass** das Auflageorgan (23.2) endlos ausgebildet und um Umlenkorgane (46) geführt ist.

8. Übernahmeeinrichtung nach einem der Ansprüche 1 bis 7, **dadurch gekennzeichnet, dass** der Verstellmechanismus (41.1-41.3) eine Hebekonfiguration (51) mit einem Hebeorgan (52) umfasst, mittels welchem das Auflageorgan (23.1, 23.2) zwecks Einstellen der Grösse des Speicherraums (V) bzw. der Tiefe (T) der Aufnahmemulde (24) von unten angehoben oder abgesenkt werden kann.

9. Übernahmeeinrichtung nach einem der Ansprüche 4 bis 8, **dadurch gekennzeichnet, dass** unterhalb des Auflageabschnitts (28) des Auflageorgans (23.1, 23.2) ein Stützorgan (30) zum Stützen des Auflageabschnittes (28) des Auflageorgans (23.1, 23.2) gegen unten angeordnet ist.

10. Übernahmeeinrichtung nach einem der Ansprüche 1 bis 9, **dadurch gekennzeichnet, dass** die Aufnahmemulde (24) zwischen einem Muldeneingang (25) und einem Muldenausgang (26) ausgebildet wird und der Muldenausgang (26) bezogen auf die Schwerkraftrichtung (G) tiefer liegt als der Muldeneingang (25).

11. **Sortieranlage** mit einem Sortierförderer (3), und mit mindestens einer Abgabestelle (4), und mit einer an der mindestens einen Abgabestelle (4) angeordneten Übernahmeeinrichtung (21) nach einem der Ansprüche 1 bis 10.

12. Sortieranlage nach Anspruch 11, **dadurch gekennzeichnet, dass** die Aufnahmemulde (24) der Puffervorrichtung (22) unmittelbar seitlich an den Sortierförderer (3) angrenzt, so dass die vom Sortierförderer (3), insbesondere von Förderschalen (5) des Sortierförderers (3) abgegebenen Stückgüter (2) schwerkraftunterstützt direkt auf das Auflageorgan (23.1, 23.2) bzw. in die Aufnahmemulde (24) der Puffervorrichtung (22) fallen.

13. **Verfahren** zum Übernehmen von an einer Abgabestelle (4) einer Sortieranlage (1) durch einen Sortierförderer (3) abgegebene Stückgüter (2) durch eine Übernahmeeinrichtung (21) nach einem der Ansprüche 1 bis 10, mit folgenden Schritten:
- Abgeben eines Stückgutes (2) an der Abgabestelle;
- Übernehmen des abgegebenen Stückgutes (2) durch die Übernahmeeinrichtung (21);
**dadurch gekennzeichnet, dass**
das Stückgut (2) in die Aufnahmemulde (24) der Puffervorrichtung (22) bewegt und in der Aufnahmemulde zwischengespeichert wird.

14. Verfahren nach Anspruch 13, **dadurch gekennzeichnet, dass** zur Zwischenspeicherung von mehreren Stückgütern (2) die Tiefe (T) der Aufnahmemulde (24) und dadurch der Speicherraum (V) durch den Verstellmechanismus (41.1-41.3) vergrössert wird und zur Weiterförderung von mindestens einem Stückgut (2) die Tiefe (T) der Aufnahmemulde (24) und dadurch der Speicherraum (V) durch den Verstellmechanismus (41.1-41.3) verkleinert wird und das Stückgut (2) in der Folge in Prozessrichtung (P) aus der Aufnahmemulde (24) herausbewegt wird.

15. Verfahren nach einem der Ansprüche 13 bis 14, **dadurch gekennzeichnet, dass** der Auflageabschnitt (28) des Auflageorgans (23.1, 23.2) vorgezogen wird und dadurch die Tiefe (T) der Aufnahmemulde (24) unter Verkleinerung des Speicherraums (V) verkleinert wird und das Stückgut (2) in der Folge über den Muldenausgang (26) aus der Aufnahmemulde (24) heraus und auf dem vorgezogenen Auflageabschnitt (28) in Prozessrichtung (P) bewegt wird.
